# FASCICULE DE BREVET EUROPEEN

(11) **EP 0 559 566 B1**
(45) Date de publication et mention de la délivrance du brevet: **08.11.1995**
(21) Numéro de dépôt: 93400562.0
(22) Date de dépôt: 04.03.1993
(51) Int. Cl.: B60N 2/22, B60N 2/42

(54) **Dispositif de blocage de vérins mécaniques de déplacement rectiligne, incorporant un organe de blocage de sécurité par inertie**
Sperrvorrichtung für eine mechanische Winde mit geradliniger Bewegung, welche eines durch Trägheit sperrendes Sicherungsorgan aufweist
Locking device for a rectilinear movement mechanical actuator, incorporating an inertia safety locking member

(30) Priorité: 06.03.1992 FR 9202701
(43) Date de publication de la demande: 08.09.1993
(73) Titulaire: BERTRAND FAURE AUTOMOBILE "B.F.A.", F-91300 Massy (FR)
(72) Inventeur: Droulon, Georges, 61100 Flers (FR)
(74) Mandataire: Madeuf, René Louis

(56) Documents cités:
- EP-A- 0 234 160
- DE-A- 3 420 103
- DE-A- 3 508 739
- FR-A- 2 574 721
- FR-A- 2 652 129
- US-A- 4 865 386

## Description

La présente invention a pour objet un dispositif de blocage de vérins mécaniques à déplacement rectiligne, incorporant un organe de blocage de sécurité par inertie, ces vérins mécaniques étant plus spécialement utilisés dans des sièges de véhicules terrestres, nautiques ou aériens, soit pour régler l'inclinaison du dossier, soit pour régler en hauteur ou d'avant en arrière l'assise du siège considéré.

On connaît en particulier par FR-A-2 652 129, un dispositif de blocage de vérins mécaniques du type susmentionné mais il est apparu que les constructeurs, incorporant ces sièges dans des véhicules divers, désiraient que ces mécanismes soient munis d'un organe de blocage de sécurité complémentaire dans le cas où, soit par fausse manoeuvre, soit par inattention, le dispositif de blocage du vérin considéré, n'étant pas parfaitement enclenché, le vérin soit bloqué automatiquement par inertie lorsqu'il se produit un choc quelconque latéral, d'avant ou d'arrière.

Il est nécessaire d'avoir une sécurité permettant le blocage instantané de la tige de vérin par rapport au boîtier lorsqu'il y a un choc. En effet, il peut se produire, lors d'un freinage brutal du véhicule considéré, que le ou les vérins de réglage d'un des sièges soient libres et donc soit le dossier, soit l'assise puisse se déplacer avec une projection dont la vitesse est égale à la vitesse initiale du véhicule provoquant ainsi un accident grave pour le passager assis sur le siège considéré.

La présente invention remédie à ces inconvénients en équipant chaque vérin mécanique non seulement d'un dispositif de blocage normal mais également d'un organe de blocage de sécurité par inertie.

De plus, il est également prévu, en plus d'un organe de blocage de sécurité par inertie, un dispositif dont l'organe de blocage de sécurité est entraîné par une masse pendulaire agissant lorsque le débattement dépasse au moins 30° par rapport à la verticale définie par l'axe de la masse pendulaire.

Pour finir, il est prévu également, en plus du dispositif muni d'un organe de blocage de sécurité par inertie avec masselotte, un organe mémoire de position qui permet d'utiliser ces sièges dans des véhicules à deux portes afin de permettre, par un mouvement rapide, le dégagement d'un siège avant soit pour la sortie soit pour l'entrée des passagers sur les sièges arrière.

Conformément à l'invention, le dispositif de blocage de vérins mécaniques à déplacement rectiligne dans lequel au moins une tige est normalement bloquée par des galets crantés coopérant avec des rampes dentées de grains en V, guidés par un boîtier interne de forme polygonale dont une partie inférieure sert de support à la tige, le déplacement des grains vers le bas provoquant un blocage et, vers le haut, un déblocage, est caractérisé en ce que la partie inférieure du boîtier intérieur présente deux rampes inclinées qui coopèrent avec un galet strié placé sous la face inférieure de la tige, ce galet strié sous l'effet de l'inertie venant se bloquer, lors d'un choc, sous la tige en montant soit le long de la rampe amont, soit le long de la rampe aval.

Suivant une autre caractéristique de l'invention, la came de blocage, coopérant avec les galets, est montée sur un arbre portant extérieurement une pièce pendulaire terminée à sa partie inférieure par une masselotte, la pièce pendulaire présentant, dans sa partie intermédiaire, une fenêtre destinée à coopérer avec l'axe du galet denté roulant sur des pans inclinés dentés pour bloquer, lors d'un choc, la barre sur le boîtier contenant le mécanisme.

Diverses autres caractéristiques de l'invention ressortent d'ailleurs de la description détaillée qui suit.

Des formes de réalisation de l'objet de l'invention sont représentées, à titre d'exemples non limitatifs, au dessin annexé.

La fig. 1 est une élévation latérale, partie en coupe, schématique, montrant un vérin mécanique conforme à l'invention monté comme dispositif de réglage d'inclinaison du dossier d'un siège.

La fig. 2 est une élévation latérale, partie en coupe, d'un dispositif de blocage de vérin mécanique à déplacement rectiligne comportant l'organe de blocage de sécurité par inertie.

La fig. 3 est une élévation de face correspondant à la fig. 2.

La fig. 4 est une élévation schématique latérale d'un siège équipé de l'organe de blocage de sécurité par inertie avec masselotte.

La fig. 5 est une vue à grande échelle du vérin disposé sur le siège à la fig. 4.

La fig. 6 est une élévation schématique latérale d'un siège équipé de l'organe de blocage de sécurité par inertie avec masselotte, la masselotte se trouvant dans la position qu'elle occupe lors d'un choc avant.

La fig. 7 est une élévation schématique latérale d'un siège équipé de l'organe de blocage de sécurité par inertie avec masselotte et comportant une mémoire de rappel en position verrouillée.

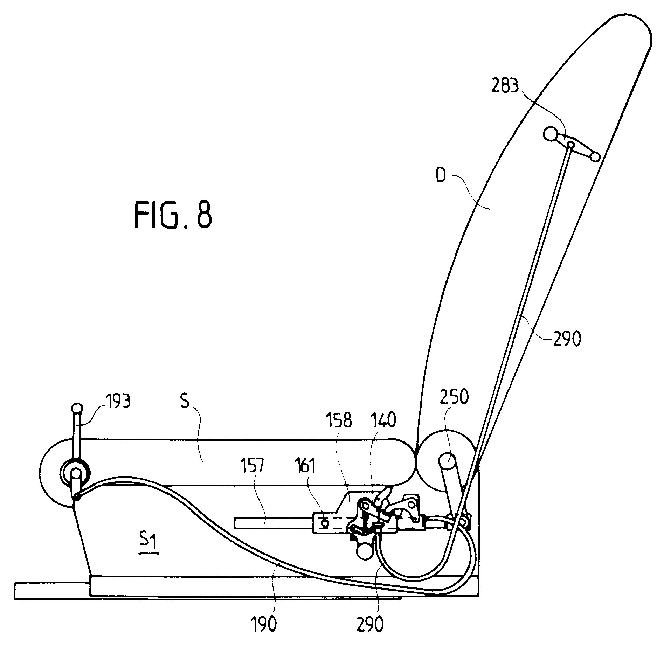

La fig. 8 est une élévation correspondant à la fig. 7, le vérin étant en cours de déverrouillage.

La fig. 9 est une élévation correspondant à la fig. 8, le vérin étant déverrouillé.

La fig. 10 est une vue, à grande échelle, correspondant au dispositif à mémoire de la fig. 8 en cours de déverrouillage.

La fig. 11 est une élévation latérale, à grande échelle, montrant le dispositif du vérin déverrouillé conforme à la fig. 9.

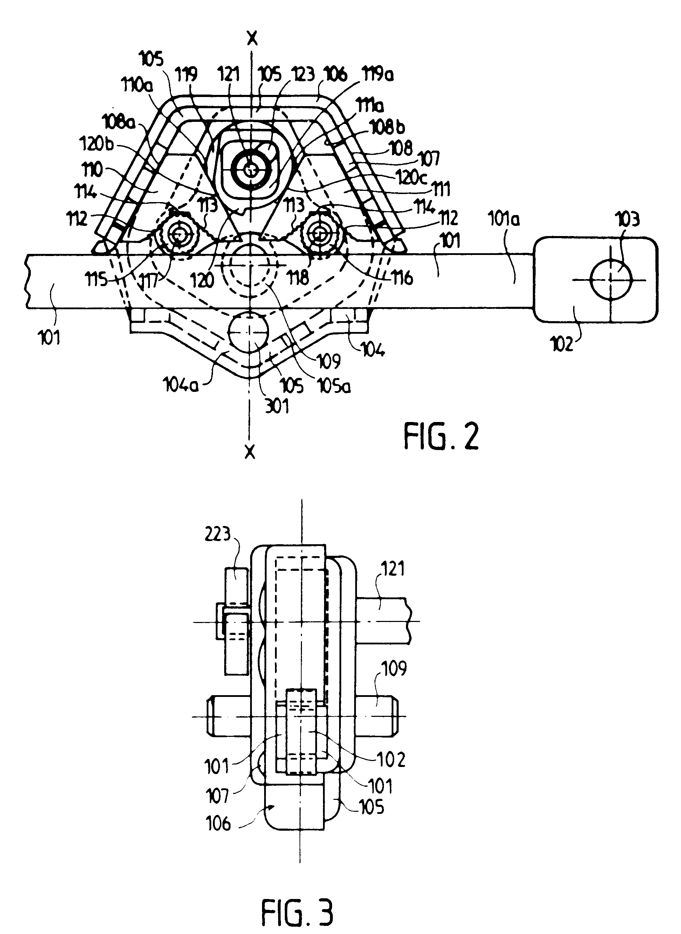

A la fig. 2, on a représenté schématiquement la tige de vérin 101 qui est rectiligne et dont la section est rectangulaire ou carrée.

Cette tige de vérin 101 porte, sur son extrémité 101a, un attelage de vérin 102 constitué par une tête percée d'un trou 103 destiné à la fixation de la tige de vérin 101 sur un organe solidaire, par exemple, du profilé mobile d'une glissière ou, dans le cas présent, sur un axe de rotation fixé sur une biellette solidaire de l'axe de rotation du dossier D tandis que l'assise S1 porte un boîtier 105 décrit en détail ci-après.

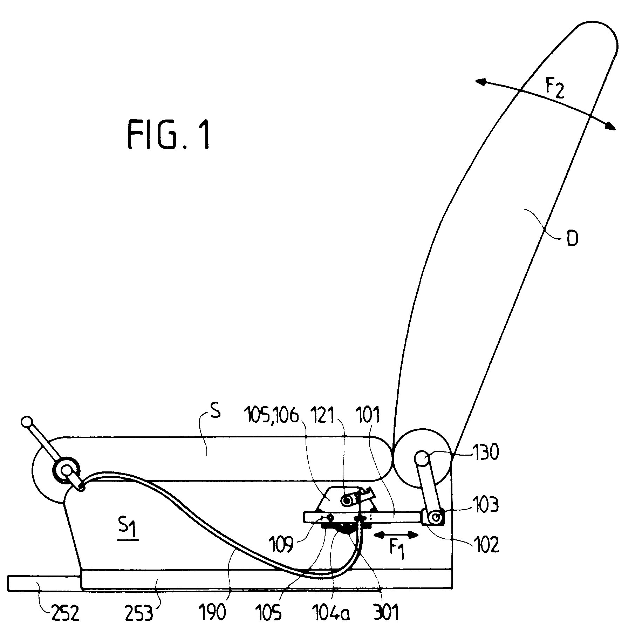

130 désigne l'axe d'articulation du dossier D sur l'assise S du siège S1 (Fig. 1).

Cette tige de vérin 101 repose sur des parties 104 du fond creux d'un boîtier interne 105 ayant en élévation une forme sensiblement polygonale, boîtier qui est recouvert par un boîtier couvercle 106 qui vient se fixer par des pattes recourbées 107 entrant dans des alvéoles 108 prévus à cet effet dans le boîtier couvercle 106.

Il est prévu, des deux côtés du boîtier 105, 106, une pièce circulaire 109 (voir Fig. 3) dont le rôle est la fixation du boîtier 105, 106, soit à l'armature d'un siège, soit en un point d'un autre mécanisme de réglage en constituant ainsi le deuxième point de fixation du vérin à course rectiligne pour l'exemple de réalisation de la fig. 1.

Ces pièces circulaires 109 sont placées dans l'axe médian vertical X-X du boîtier 105, 106. Les côtés inclinés 108a, 108b du boîtier 105 servent de chemins de guidage à deux grains 110, 111 en forme de chapeau de gendarme et dont la plus large base est usinée pour former à chaque fois deux rampes dentées 112, 113 séparées par un dégagement 114. Les rampes dentées 112, 113 sont destinées à coopérer avec des galets 115, 116 également striés montés sur des axes 117, 118 dépassant les faces latérales des galets 115, 116. Les axes 117, 118 sont montés dans une pièce 119 en forme de bicorne.

Une came 120 est placée entre les deux grains 110, 111 et le mouvement de cette came est commandé par un arbre 121. L'ensemble, galets 115, 116, grains 110, 111, pièce en forme de bicorne 119, et came 120, est maintenu dans les boîtiers 105, 106. De plus, l'arbre 121 peut être commandé en rotation soit par un levier non représenté, soit par tout autre moyen de rotation désiré. Au moins un bossage 123 solidaire de l'arbre 121 est placé dans l'évidement central 119a de la pièce en forme de bicorne 119, la came 120 étant centrée au moyen d'alésages réalisés dans le boîtier 105, le couvercle 106 et l'arbre 121.

De plus, un ressort spiral 223 (voir fig. 3) est fixé par l'une de ses extrémités sur l'arbre 121 et par son autre extrémité sur un plot solidaire du couvercle 106. On doit noter que 120b et 120c désignent les points de contact de la came 120 sur les faces latérales 110a, 111a des grains 110, 111.

Finalement, la présence du ressort spiral 223 a pour effet de maintenir en position serrée les galets 115, 116 par l'intermédiaire des grains 110, 111 et de la came 120 sur la tige rectiligne 101 à section carrée ou rectangulaire.

Comme on peut le voir à la fig. 2, un galet strié 301 est placé dans le fond creux 104a, 105a du boîtier 105 et est normalement au repos dans cette position.

Ainsi, en faisant tourner l'arbre 121 dans le sens contraire aux aiguilles d'une montre, il est possible de provoquer une légère rotation de la came 120 dont les redents 120b, 120c libèrent ainsi la pression qu'exerce la came sur les grains 110, 111. Ainsi, les dentures 112, 113 des grains 110, 111 se dégagent des dentures des galets 115, 116 qui reposaient fermement sur la face supérieure de la tige du vérin 101 en bloquant celle-ci.

Cette tige est donc libre et peut donc se déplacer dans les sens opposés désignés par la double flèche F1 (fig. 1).

Dans certains cas et pour assurer, lorsque la came 120 est effacée, le soulèvement aisé des galets striés 115, 116, il est possible de prévoir, en supplément, deux ressorts courbes ayant sensiblement la forme d'un Ω et centrés autour des pièces circulaires 109 solidaires des deux côtés du boîtier 105 et du couvercle 106.

Lorsqu'on a placé en position correcte la tige de vérin 101, il suffit de faire tourner l'arbre 121 dans le sens des aiguilles d'une montre pour que la came 120, par ses redents 120b et 120c, bloque de nouveau les grains 110, 111 qui s'abaissent en maintenant ainsi les galets 115, 116 sur la face supérieure de la tige de vérin 101.

Dans le cas où il se produirait un choc au moment où l'occupant du siège règle son dossier D (dans le cas de la fig. 1, mouvement suivant la flèche F2) ou la position de l'assise S soit d'avant en arrière, soit en élevant ou abaissant cette assise, le verrouillage de la tige 101 n'étant pas assuré, cette partie de siège considéré sous l'effet du freinage brutal se déplacerait à la vitesse initiale du véhicule occasionnant ainsi un accident grave mais, du fait du galet strié 301 qui se déplace également à la vitesse initiale du véhicule, ce galet monterait sur les rampes du creux 104a, 105a soit à sa droite, soit à sa gauche et entrerait en contact immédiatement avec le dessous de la tige 101 en provoquant un coincement de cette tige entre les parties inférieures du boîtier inférieur 105 et le galet strié 301 évitant ainsi un accident grave.

Le coincement se fait très rapidement car la rampe droite ou gauche du fond creux 104a étant d'une faible inclinaison inférieure à 30°, on obtient une commande instantanée brusque n'endommageant pas les pièces du vérin mécanique.

Pour finir, il y a lieu d'indiquer que le galet 301 est traité dur pour permettre la pénétration de ses dents dans la tige 101 et la rampe considérée du boîtier 105.

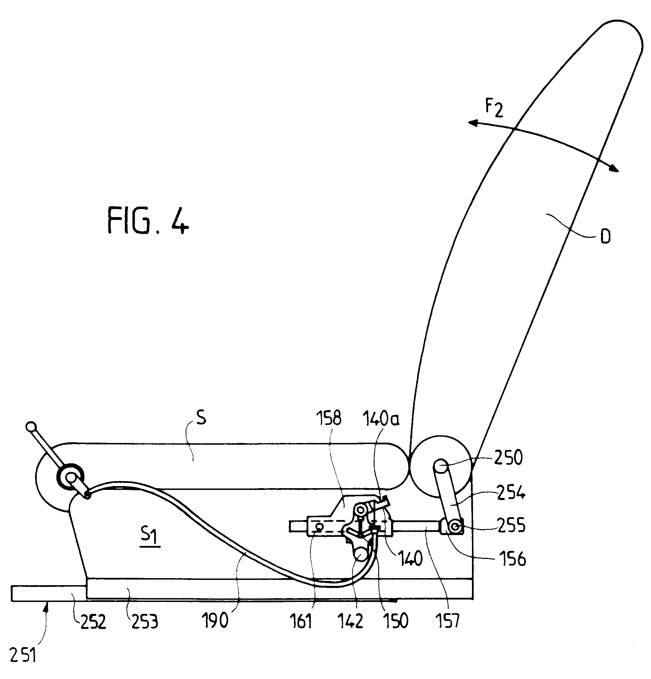

A la fig. 4, on a représenté un siège S1 comportant, à sa partie supérieure, une assise S et, à sa partie arrière, un dossier D, ce dernier étant articulé sur au moins un axe 250 solidaire de l'armature du siège S1 et permettant ainsi sa rotation aisée d'avant en arrière et d'arrière en avant suivant la flèche F2.

L'armature du siège S1 est montée sur au moins une sinon deux glissières 251 dont on voit le profilé inférieur 252 et le profilé supérieur 253. Bien entendu, une commande non représentée permet de verrouiller, à l'aide d'un peigne, le profilé supérieur coulissant 253 sur le profilé inférieur fixe 252 solidaire du plancher du véhicule.

Les axes 250 d'articulation du dossier D sont solidaires des bras 254 qui permettent la commande d'avant en arrière et d'arrière en avant suivant la flèche F2 du dossier du siège.

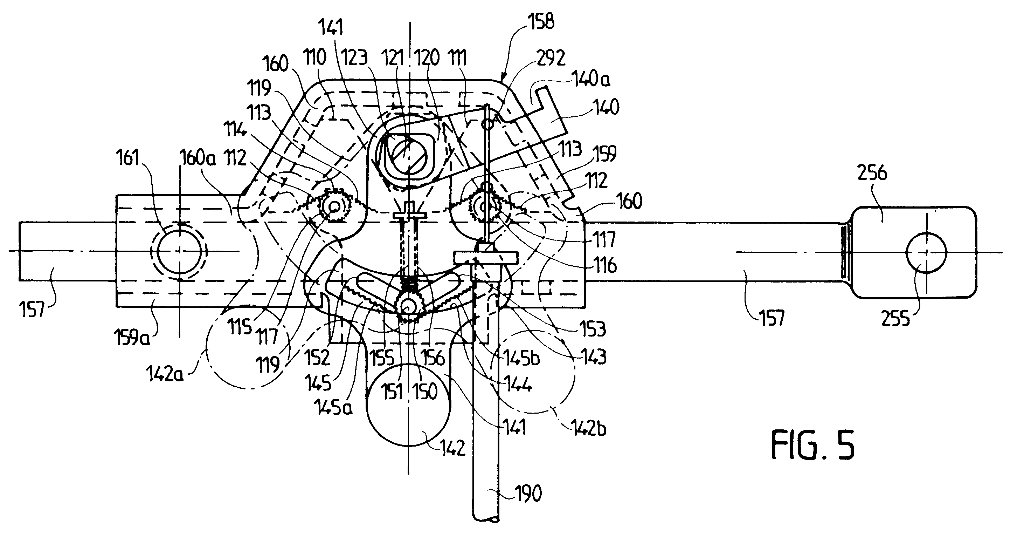

L'extrémité libre de chaque bras 254 porte un axe 255 qui est attelé à la tête 156 de la tige de vérin 157. Cette tige de vérin 157 pénètre dans le bottier 158 (voir fig. 5) constitué par deux coquilles, l'une extérieure 159 et l'autre intérieure 160, qui s'emboîtent l'une dans l'autre et qui sont prolongées vers leur partie avant 159a, 160a pour former guide de la tige 157 (Fig. 5). Le boîtier 158 est maintenu sur l'armature S1 du siège par des portées cylindriques 161.

Comme cela a déjà été indiqué ci-dessus, l'intérieur du boîtier 158 contient deux grains 110, 111 en forme de chapeau de gendarme et dont la base est usinée pour former à chaque fois deux rampes dentées 112, 113 séparées par un dégagement 114. Les grains 110, 111 sont guidés par les parois latérales internes de la coquille intérieure 160. De plus, comme cela a déjà été indiqué, les grains 110, 111 peuvent être bloqués ou débloqués par une came 120 agissant sous l'action d'un arbre 121, l'arbre commandant la rotation d'au moins un bossage 123 qui tend à soulever la pièce en forme de bicorne 119 pour dégager les deux grains 110, 111 dont les rampes 112, 113 coopèrent avec des galets dentés 115, 116 montés sur des axes 117, 118 solidaires de la pièce 119 en forme générale de bicorne.

Il y a lieu également de remarquer que, sur l'arbre 121, sont montés, en plus de la came 120 et hors du boîtier 158, d'une part, un crochet 140 et, d'autre part, une pièce pendulaire 141 terminée à sa partie inférieure par une masselotte 142. La pièce 141 présente, dans sa partie intermédiaire, une zone évasée 143 percée d'une fenêtre 144.

Comme dans le cas de la fig. 2, la partie inférieure du boîtier 158 comporte sous la tige 157 une pièce 145 en V munie de deux dentures 145a, 145b dans lesquelles peut rouler un galet cranté 150 monté sur un axe 151 guidé dans des alvéoles 152, 153 parallèles aux rampes crantées 145a, 145b mais ces alvéoles sont creusées dans l'intérieur des coquilles extérieure 159 et intérieure 160.

Lorsqu'il se produit un choc brutal, la masselotte 142 se déplace en 142a ou 142b suivant que le choc a lieu en avant ou en arrière et, à ce moment, le galet cranté 150 est poussé par son axe 151 soit vers l'avant, soit vers l'arrière en pénétrant ainsi sous la tige 157 du vérin qui se trouve être bloqué même dans le cas où, pour une raison quelconque, les galets 115, 116 ne seraient pas en position de blocage par exemple au moment d'un réglage de l'inclinaison du dossier D du siège S1.

Du fait que l'axe 151 du galet 150 est monté sur une tige pivotante 155 et est repoussé par un ressort 156 lorsque la masselotte 142 reprend sa place centrale, le galet 150 revient sous l'action conjuguée de la tige 155 et du ressort 156 dans la position médiane (représentée à la fig. 5) donc dans une position où la tige 157 n'est plus verrouillée par le galet 150.

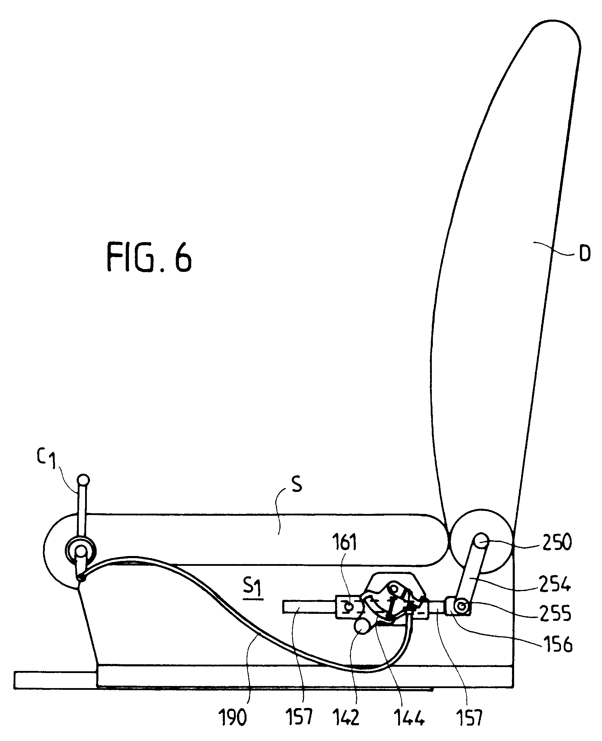

La fig. 6 montre la position de la masselotte 142 lorsqu'elle bloque le galet strié 150 sous la tige 157 en verrouillant ainsi solidement le dossier D du siège S1 alors que la tige 157 n'est plus en contact avec les galets striés 115, 116 puisque le levier C1, ayant agi sur le câble 190, a déplacé vers le haut la pièce en bicorne 119 (arbre 121, came 120 et crochet 140) provoquant le déverrouillage des galets striés 115, 116.

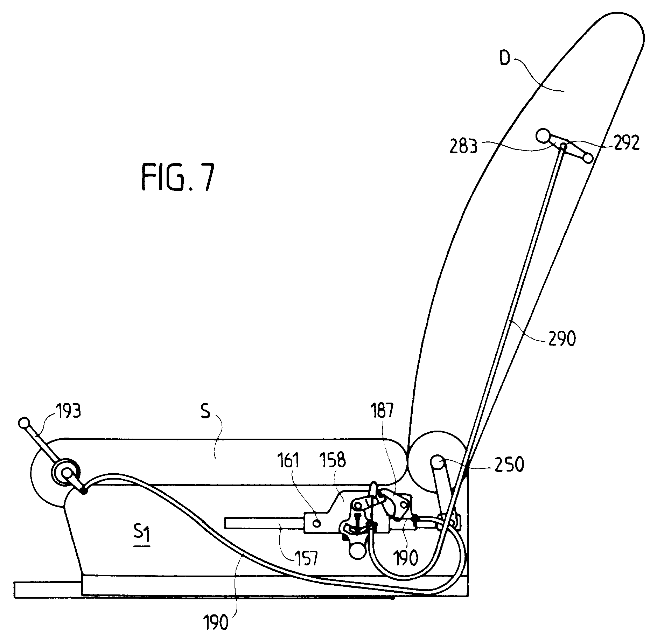

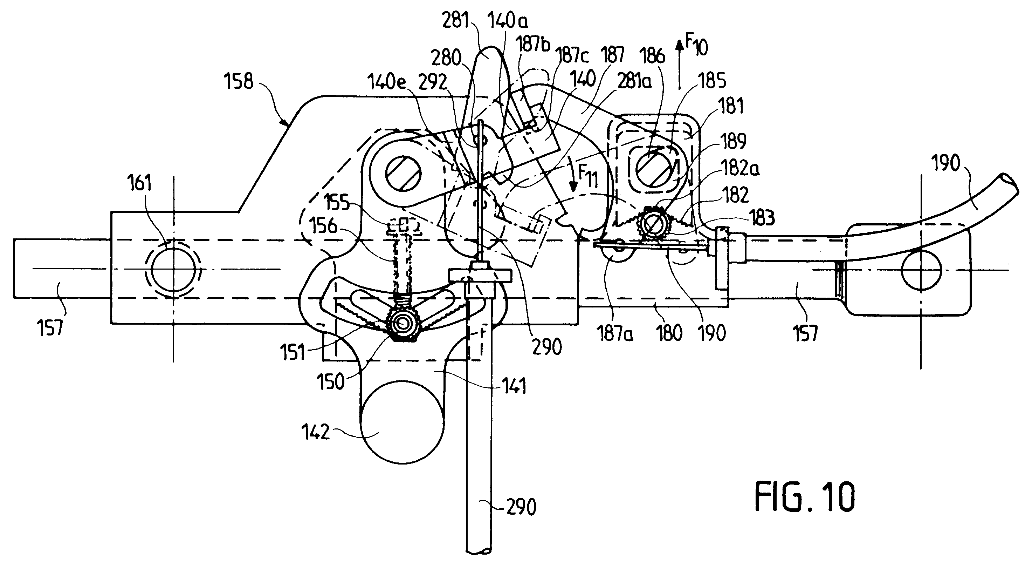

La fig. 7 montre un siège équipé de l'organe de blocage de sécurité par inertie avec masselotte tel que décrit ci-dessus mais comportant en plus une mémoire de rappel en position verrouillée. En effet, comme on peut le voir aisément à la fig. 10, la tige 157 porte, derrière le boîtier 158, un boîtier 180 pouvant coulisser normalement sur la tige 157 et qui contient intérieurement une pièce 181 mobile verticalement à l'intérieur du boîtier 180 et présentant, à sa base, une découpe 182 en V qui est dentée avec un dégagement central 182a pour permettre la mise en place d'un galet strié 183 qui repose sur la partie supérieure de la tige 157. La pièce 181 peut coulisser verticalement dans le sens de la flèche F10 (fig. 10) sous l'action d'une came 185 montée sur un arbre 186 commandé par un levier 187 articulé sur l'arbre 186. La came 185 est placée à l'intérieur d'un espace alvéolaire 189 percé dans la pièce 181.

L'extrémité inférieure 187a du levier 187 est attelée à un câble 190 qui est un câble du genre Bowden et que l'on voit très bien à la fig. 7. Ce câble Bowden est commandé par un levier 193 articulé à l'extrémité avant du siège S1.

La partie supérieure terminale 187b du levier 187 se termine par une partie en redan 187c coopérant avec l'extrémité en creux 140a du levier 140.

De plus, il est prévu, fixé sur un axe 280 du boîtier 158, un doigt pivotant 281 qui, normalement sous l'action d'un ressort non représenté enroulé autour de l'axe 280, ramène le doigt pivotant 281 dans la position en traits interrompus de la fig. 10.

Comme cela est visible en particulier à la fig. 7, une gaine Bowden 290 relie par un câble 292 le crochet 140 à un levier de manoeuvre 283 articulé sur le dossier D.

Dans la position représentée à la fig. 10, le crochet 140 est maintenu en position abaissé (traits discontinus) du fait que le doigt 281 verrouille ce crochet à l'aide du cran 281a coopérant avec une butée ou un bossage rectiligne 140e prévu sur le crochet 140.

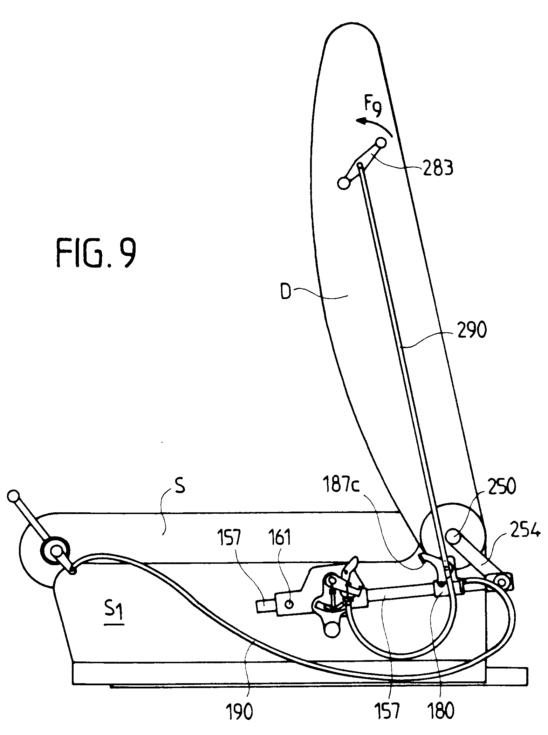

Pour basculer le dossier vers l'avant (Fig. 9), la rotation du levier 283 suivant la flèche F9 entraîne le câble 292 guidé par la gaine 290 qui agit sur l'extrémité 187a du levier 187. Lors de l'abaissement du levier 187 suivant la flèche F11, l'extrémité 187c entre en contact avec la zone 140c. En fin de course du levier 187, le cran 281a du doigt 281 coopère avec le bossage rectiligne 140c et, de ce fait, maintient le crochet 140 dans la position de déverrouillage du vérin.

Ainsi, on libère le bottier 158 du boîtier 180 qui reste en place et l'on peut alors faire pivoter le dossier D (voir fig. 9) et faire avancer l'ensemble du siège S1 vers l'avant tout en gardant en mémoire la position normale de ce siège car alors il suffit de ramener ce dernier vers l'arrière pour qu'il reprenne la position représentée à la fig. 7.

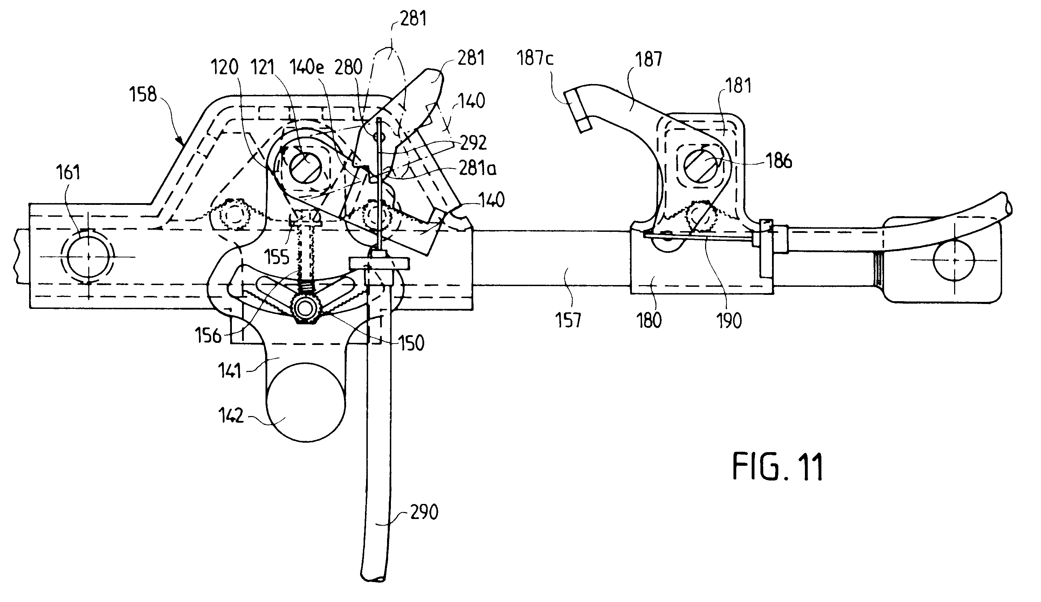

La fig. 11 représente la position du vérin 158 déplacé lorsque le dossier D occupe la position de la fig. 9. Dans ce cas, le boîtier 180 est resté en position mémorisée (fig. 9). Lors du retour du dossier D à la position de la fig. 7, l'extrémité 187c du levier 187 entre en contact avec la partie 281 du doigt de maintien du levier 140. Ce doigt 281 tourne alors dans le sens contraire aux aiguilles d'une montre pour libérer le levier 140 et permettre à la came 120 de reprendre sa position de verrouillage en poussant les galets 115, 116 sur la tige 157. On obtient ainsi le blocage du dossier D dans la position représentée à la fig. 7.

## Revendications

1. Dispositif de blocage de vérins mécaniques à déplacement rectiligne, dans lequel au moins une tige (101) est normalement bloquée par des galets crantés (115, 116) coopérant avec des rampes (112, 113) dentées de grains (110, 111) en V, guidés par un boîtier interne (105) de forme polygonale dont une partie inférieure sert de support à la tige (101), le déplacement des grains vers le bas provoquant un blocage et, vers le haut, un déblocage, caractérisé en ce que la partie inférieure du boîtier intérieur (105) présente deux rampes inclinées (104a, 105a) qui coopèrent avec un galet strié (301) placé sous la face inférieure de la tige (101), ce galet strié sous l'effet de l'inertie venant se bloquer, lors d'un choc, sous la tige (101) en montant soit le long de la rampe amont (104a), soit le long de la rampe aval (105a).

2. Dispositif de blocage suivant la revendication 1, caractérisé en ce que l'angle d'inclinaison des rampes (104a, 105a) est compris entre 15 et 30°.

3. Dispositif de blocage suivant la revendication 1, caractérisé en ce qu'une came de blocage (120), coopérant avec les galets (115, 116), est montée sur un arbre (121) portant extérieurement une pièce pendulaire (141) terminée à sa partie inférieure par une masselotte (142), la pièce pendulaire (141) présentant, dans sa partie intermédiaire, une fenêtre (144) destinée à coopérer avec l'axe (151) du galet denté (150) roulant sur des pans inclinés dentés pour bloquer, lors d'un choc, la barre (157) sur le boîtier (158) contenant le mécanisme.

4. Dispositif de blocage suivant l'une des revendications 1 à 3, caractérisé en ce que l'axe (151) du galet denté (150) est guidé dans des alvéoles (152, 153) prévues à l'intérieur du boîtier (158).

5. Dispositif de blocage suivant la revendication 3, caractérisé en ce que l'arbre (121) portant la came (120) est muni d'un crochet (140) normalement bloqué par un doigt pivotant (281) coopérant avec une butée (140e) et un levier (187) solidaire d'un boîtier (181) formant organe mémoire sur la tige (157) de façon que, par l'intermédiaire de deux commandes séparées, on puisse tour à tour soit seulement débloquer le coulissement horizontal du siège en laissant la mémoire en place, soit, au contraire, déplacer simultanément le siège d'avant en arrière ou d'arrière en avant en déplaçant en même temps la mémoire constituée par le boîtier (180).

## Claims

1. Device for locking rectilinear displacement mechanical actuators, wherein at least one rod (101) is normally locked by notched rollers (115, 116) cooperating with toothed ramps of V-shaped pawls (110, 111), guided by an inner casing (105) of a polygonal-shape, a lower portion of which is used for supporting the rod (101), the downward movement of the pawls causing a locking and their upward movement an unlocking, characterized in that a lower portion of the inner casing (105) has two slanting ramps (104a, 105a) which cooperate with a striated roller (301) placed underneath the lower face of the rod (101), this striated roller, under effect of inertia, coming to be locked, under an impact, underneath the rod (101) by moving upwardly either along the up-stream ramp (104a), or along the downstream ramp (105a).

2. Locking device according to claim 1, characterized in that the inclination angle of the ramps (104a, 105a) is comprised between 15 and 30°.

3. Locking device according to claim 1, characterized in that a locking cam (120), cooperating with the rollers (115, 116), is mounted on a shaft (121) outerly carrying a pendular member (141) terminated, at its lower portion, by a flyweight (142), the pendular member (141) having in its intermediate portion, a window (144) for cooperating with the pin (151) of the toothed roller (150) rolling on toothed inclined surfaces in order to lock, when there is an impact, the bar (157) on the casing (158) containing the mechanism.

4. Locking device according to one of claims 1 to 3, characterized in that the pin (151) of the toothed roller (150) is guided in cutouts (152, 153) provided inside the casing (158).

5. Locking device according to claim 3, characterized in that the shaft (121) carrying the cam (120) is provided with a hook (140) normally locked by a pivoting finger (281) cooperating with an abutment (140e) and a lever (187) rigidly connected with a casing (181) forming a memory member on the rod (157), so that, by means of two separate control members, it is possible, in turn, either only to unlock the horizontal sliding of the seat while leaving the memory member in position, or, conversely, to simultaneously displace the seat from front to rear or from rear to front by displacing, at a same time, the memory member formed by the casing (180).

## Patentansprüche

1. Feststellvorrichtung aus mechanischen Zylindern mit geradliniger Verschiebung, bei welcher mindestens eine Stange (101) normalerweise durch Rollen mit Punktrastung (115, 116) arretiert wird, die mit gezahnten Führungsschienen (112, 113) V-förmiger Pfannen (110, 111) zusammenwirken, welche von einem inneren Gehäuse (105) polygonaler Form geführt werden, von dem ein unterer Teil als Auflage für die Stange (101) dient, wobei die Verschiebung der Pfannen nach unten eine Blockierung, und nach oben eine Entriegelung bewirkt, dadurch gekennzeichnet, daß der untere Teil des Innengehäuses (105) zwei geneigte Führungsschienen (104a, 105a) aufweist, die mit einer gerieften Rolle (301) zusammenwirken, welche sich unter der Unterseite der Stange (101) befindet, wobei diese geriefte Rolle unter der Wirkung der Trägheit bei einem Stoß unter der Stange (101) blockiert wird, indem sie sich entweder entlang der Führungsschiene aufwärts (104a) oder entlang der Führungsschiene abwärts (105a) bewegt.

2. Feststellvorrichtung gemäß Anspruch 1, dadurch gekennzeichnet, daß der Neigungswinkel der Führungsschienen (104a, 105a) zwischen 15 und 30° liegt

3. Feststellvorrichtung gemäß Anspruch 1, dadurch gekennzeichnet, daß eine Blockierungsnocke (120), die mit Rollen (115, 116) zusammenwirkt, auf eine Welle (121) montiert ist, welche außen ein pendelartiges Teil (141) trägt, das in seinem unteren Teil in einem Fliehgewicht (142) endet, wobei das pedelartige Teil (141) in seinem Mittelteil eine Aussparung (144) aufweist, die dazu bestimmt ist, mit der Achse (151) der gezahnten Rolle (150) zusammenzuwirken, welche auf schrägen gezahnten Flächen rollt, um bei einem Stoß die Stange (157) an dem Gehäuse (158), das den Mechanismus enthält, zu arretieren.

4. Feststellvorrichtung gemäß einem der Ansprüche 1 - 3, dadurch gekennzeichnet, daß die Achse (151) der gezahnten Rolle (150) in Zellen (152, 153) geführt wird, die im Inneren des Gehäuses (158) vorgesehen sind.

5. Feststellvorrichtung gemäß Anspruch 3, dadurch gekennzeichnet, daß die Welle (121), die die Nocke (120) trägt, mit einem Haken (140) versehen ist, der normalerweise durch einen Drehzapfen (281) blockiert ist, welcher mit einem Anschlag (140e) und an einem Hebel (187) zusammenwirkt, der mit einem Gehäuse (181) formschlüssig verbunden ist, das auf der Stange (157) ein Speicherorgan bildet, so daß mittels zweier getrennter Betätigungen abwechselnd entweder nur das waagerechte Gleiten des Sitzes entriegelt werden kann, wobei der Speicher in der ursprünglichen Position bleibt, oder im Gegensatz dazu, gleichzeitig der Sitz von vorne nach hinten oder von hinten nach vorne bewegt werden kann, unter gleichzeitigem Verschieben des Speichers, der durch das Gehäuse (180) gebildet wird.
